# EUROPÄISCHE PATENTSCHRIFT

(11) **EP 2 363 016 B1**
(45) Veröffentlichungstag und Bekanntmachung des Hinweises auf die Patenterteilung: **04.12.2013**
(21) Anmeldenummer: 11155013.3
(22) Anmeldetag: 18.02.2011
(51) Int. Cl.: A01D 43/08, A01D 43/10

(54) **Feldhäcksler mit einer zwischen einer Betriebsposition und einer Außerbetriebsposition bewegbaren Konditioniereinrichtung**
Forage harvester with a conditioning device which can move between an operating position and a non-operational position
Ramasseuse-hacheuse dotée d'un dispositif de conditionnement mobile entre une position de fonctionnement et une position d'arrêt

(30) Priorität: 02.03.2010 DE 102010002509
(43) Veröffentlichungstag der Anmeldung: 07.09.2011
(73) Patentinhaber: Deere & Company, Moline, IL 61265-8098 (US)
(72) Erfinder: Engel, Manfred, 66484, Großsteinhausen (DE)
(74) Vertreter: Holst, Sönke

(56) Entgegenhaltungen:
- EP-A1- 1 600 050
- DE-A1- 4 215 696
- DE-A1-102007 055 756
- NL-A- 8 401 372

## Beschreibung

Die Erfindung betrifft einen selbstfahrenden Feldhäcksler mit einem Rahmen, einer Häckseltrommel, einem stromab der Häckseltrommel angeordneten Nachbeschleuniger und einem Kanal zwischen der Häckseltrommel und dem Nachbeschleuniger, der einen Abschnitt umfasst, in den wahlweise eine Konditioniereinrichtung oder ein hohles Gehäuse einfügbar ist, wobei die Konditioniereinrichtung und das hohle Gehäuse gemeinsam an einem mittels eines Verstellantriebs um eine horizontale Schwenkachse verschwenkbaren Schwenkarm abgestützt sind, der zwischen einer Betriebsposition der Konditioniereinrichtung, in welcher sich die Konditioniereinrichtung im Abschnitt befindet und einer Außerbetriebsposition der Konditioniereinrichtung beweglich ist, in welcher sich das Gehäuse im Abschnitt befindet.

### Stand der Technik

Feldhäcksler dienen zur Ernte von ganzen Pflanzen oder ihren Teilen, die im Betrieb mittels eines Erntevorsatzes von einem Feld aufgenommen, durch Vorpresswalzen zusammengedrückt und einer Messertrommel zugeführt werden, deren Häckselmesser die Pflanzen im Zusammenwirken mit einem Gegenmesser zerschneiden. Anschließend werden die zerschnittenen Pflanzen oder -teile optional einer Konditioniereinrichtung zugeführt und durch eine Nachbeschleunigungseinrichtung in einen Auswurfkrümmer gefördert, der sie auf ein Transportfahrzeug überlädt. Die zerkleinerten Pflanzen dienen üblicherweise als Viehfutter oder zur Biogaserzeugung.

Die Konditioniereinrichtung umfasst üblicherweise zwei oder mehr gegensinnig angetriebene Walzen, die durch Federkraft gegeneinander vorgespannt sind und zwischen denen das Häckselgut hindurchgeführt wird. Sie wird bei der Maisernte benötigt, um die im Häckselgut enthaltenen Körner anzuschlagen und die Verdaulichkeit des Futters zu verbessern. Bei der Grasernte ist eine Konditionierung hingegen nicht erforderlich, weshalb die Walzen der Konditioniereinrichtung entweder in eine Stellung verbracht werden, in der zwischen ihnen ein hinreichend großer Spalt verbleibt, oder die Konditioniereinrichtung wird aus dem Kanal zwischen der Häckseltrommel und dem Nachbeschleuniger herausgeschwenkt und ein hohles Gehäuse wird an ihrer Stelle dort eingefügt.

Ein derartiger Feldhäcksler ist in der als gattungsbildend angesehenen DE 42 15 696 A1 offenbart. Die Konditioniereinrichtung ist dort an einem Schwenkarm befestigt, der auch das hohle Gehäuse trägt. Die Schwenkachse des Schwenkarms befindet sich oberhalb des Gehäuses des Nachbeschleunigers und bezüglich der Vorwärtsrichtung des Feldhäckslers geringfügig rückwärtig der Drehachse des Nachbeschleunigers. In der Außerbetriebsposition befindet sich die Konditioniereinrichtung rückwärtig des nach hinten und oben ansteigenden Kanals zwischen der Häckseltrommel und dem Nachbeschleuniger.

### Aufgabe

In der DE 42 15 696 A1 erfolgt die Bewegung der Konditioniereinrichtung zwischen ihrer Betriebsposition und ihrer Außerbetriebsposition ausschließlich um die Schwenkachse des Schwenkarms. In ihrer Außerbetriebsposition ragt sie relativ weit nach hinten und oben in den Raum rückwärtig des Nachbeschleunigers hinein und benötigt somit recht viel Platz.

Das der Erfindung zu Grunde liegende Problem wird darin gesehen, einen Feldhäcksler dahingehend zu verbessern, dass die Konditioniereinrichtung in ihrer Außerbetriebsposition in eine raumsparende Position verbracht wird.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Feldhäcksler umfasst einen Rahmen, an dem eine Häckseltrommel und ein Nachbeschleuniger befestigt sind. Ein Kanal erstreckt sich zwischen der Häckseltrommel und dem Nachbeschleuniger. In einen (unterbrochenen) Abschnitt des Kanals kann für die Maisernte eine Konditioniereinrichtung oder an ihrer Stelle für die Ernte von Gras oder anderer Pflanzen ein hohles Gehäuse eingesetzt werden. Ein mittels eines Verstelltriebs um eine horizontale und sich quer zur Vorwärtsrichtung erstreckende Schwenkachse schwenkbarer Schwenkarm haltert die Konditioniereinrichtung und das hohle Gehäuse. Der Schwenkarm ist um die Schwenkachse zwischen einer Betriebsposition der Konditioniereinrichtung, in welcher die Konditioniereinrichtung sich im Abschnitt des Kanals und das hohle Gehäuse sich außerhalb des Kanals befindet und einer Außerbetriebsposition bewegbar, in welcher die Konditioniereinrichtung sich außerhalb des Kanals und das hohle Gehäuse sich im Abschnitt des Kanals befindet. Die Konditioniereinrichtung ist ihrerseits am Schwenkarm um eine sich parallel zur Schwenkachse erstreckende Achse angelenkt. Eine Zwangsführung koppelt die Konditioniereinrichtung derart mit dem Rahmen, dass die Konditioniereinrichtung gleichsinnig mit dem Schwenkarm gedreht wird. Wenn der Schwenkarm somit aus der Betriebsposition in eine Richtung in die Außerbetriebsposition gedreht wird, dreht sich die Konditioniereinrichtung um einen weiteren Winkel in diese Richtung. Bewegen sich der Schwenkarm und die Achse auf dem Weg von der Betriebsposition in die Außerbetriebsposition nach oben, bewegt sich die Konditioniereinrichtung demgegenüber noch weiter nach oben.

Auf diese Weise erreicht man, dass die Konditioniereinrichtung in ihrer Außerbetriebsposition eine raumsparende, nach oben gedrehte Stellung einnimmt.

Die Zwangsführung setzt sich bei einer Ausführungsform der Erfindung aus einer Platte mit einem Schlitz und einem Mitnehmer zusammen, der in den Schlitz eingreift. Der Schlitz kann gerade oder gekrümmt sein. Alternativ können beliebige andere Zwangsführungen verwendet werden, die beispielsweise mit Rollen und Schienen oder flexiblen Zugmitteln (Ketten oder Seilen) ausgestattet sind.

Bei der erwähnten Ausführungsform bietet es sich an, die Platte starr mit der Konditioniereinrichtung zu koppeln, während der Mitnehmer am Gehäuse des Nachbeschleunigers angebracht werden kann. Denkbar wäre auch eine umgekehrte Anordnung mit einem an der Konditioniereinrichtung angebrachten Mitnehmer und einer am Gehäuse des Nachbeschleunigers angebrachten Platte.

Falls die Konditioniereinrichtung auf absehbare Zeit nicht benötigt wird, wie bei der Grasernte im Frühling, wird sie vorzugsweise vom Feldhäcksler demontiert und bis zur nächsten Benutzung eingelagert. Somit bietet sich eine abnehmbare Befestigung der Konditioniereinrichtung an einer Halterung an. Die Halterung ist ihrerseits um die Achse drehbar am Schwenkarm gelagert und mit der Platte verbunden.

Die Befestigung der Konditioniereinrichtung an der Halterung kann durch Winkel oder einen Kanal erfolgen, die geeignete, vorspringende Elemente (z. B. Rollen) eines Stützzusammenbaus der Konditioniereinrichtung untergreifen. Die Konditioniereinrichtung kann somit durch eine geeignete Hubvorrichtung aus der Halterung herausgezogen und aus dem Feldhäcksler herausgehoben werden, vorzugsweise nachdem eine Arretierung der Konditioniereinrichtung an der Halterung gelöst wurde.

Vorzugsweise befindet sich die Konditioniereinrichtung in ihrer Außerbetriebsposition bezüglich der Vorwärtsrichtung des Feldhäckslers rückwärtig des Abschnitts des Kanals. Dort befindet sich üblicherweise ein kleinerer oder größerer, von der Seite her zugänglicher Freiraum, dem nach hinten wiederum ein den Verbrennungsmotor aufnehmender Raum folgt. Die Konditioniereinrichtung kann mittels der erwähnten Hubvorrichtung aus der Halterung gezogen, angehoben, aus dem Freiraum herausgenommen und später wieder eingesetzt werden, wobei es sich anbietet, die Konditioniereinrichtung mit Kopplungspunkten (Haken, Ösen oder dergleichen) für die Hubvorrichtung auszustatten. Die Hubeinrichtung kann ein separater Kran, Gabelstapler oder Frontlader sein oder sie ist am Feldhäcksler abnehmbar oder permanent befestigt.

Die Schwenkachse des Schwenkarms liegt vorzugsweise hinter or und/oder oberhalb der Drehachse des Nachbeschleunigers, d. h. von der Drehachse beabstandet. Der Antrieb der Konditioniereinrichtung erfolgt über einen Riementrieb, der eine mit der Welle des Nachbeschleunigers in Antriebsverbindung stehende Riemenscheibe umfasst. Andere Riemenscheiben treiben dann die Walzen der Konditioniereinrichtung an, wobei weitere Umlenk- und/oder Spannrollen für den Riemen vorgesehen sein können. Die Positionierung der Schwenkachse des Schwenkarms und die Zwangsführung sorgen dafür, dass der Riemen bei in die Außerbetriebsposition verbrachter Konditioniereinrichtung entspannt ist und somit zum Ausbau der Konditioniereinrichtung abgenommen werden kann, bzw. die Antriebsverbindung zur Konditioniereinrichtung unterbrochen ist, wenn diese in der Außerbetriebsposition verbleibt. In der Betriebsposition ist der Riemen hingegen gespannt. Der Antrieb der Welle des Nachbeschleunigers kann auf der dem erwähnten Riemen gegenüber liegenden Seite des Nachbeschleunigers durch einen weiteren Riemen erfolgen, der auch die Häckseltrommel antreiben kann.

Der Verstellantrieb zur Bewegung der Konditioniereinrichtung zwischen der Betriebsposition und der Außerbetriebsposition kann durch einen fremdkraftbetätigten (Elektro- oder Hydraulik-) Motor bzw. Zylinder erfolgen, oder durch einen manuellen Antrieb. Die Umsetzung der Drehbewegung des Antriebs erfolgt vorzugsweise mittels einer durch den Motor oder eine Kurbel angetriebene Spindel, die einen Hebelmechanismus mit dem Schwenkarm zusammenwirkt.

### Ausführungsbeispiel

In den Zeichnungen ist ein nachfolgend näher beschriebenes Ausführungsbeispiel der Erfindung dargestellt. Es zeigt:
- Fig. 1: einen Feldhäcksler in Seitenansicht und in schematischer Darstellung,
- Fig. 2: eine gegenüber der Figur 1 von der anderen Seite des Feldhäckslers betrachtete seitliche Ansicht eines Abschnitts des Kanals zwischen der Häckseltrommel und dem Nachbeschleuniger mit einer in der Außerbetriebsposition befindlichen Konditioniereinrichtung, Fig. 3 eine Ansicht gemäß Figur 2 bei einer in einer Zwischenstellung befindlichen Konditioniereinrichtung, und
- Fig. 4: eine Ansicht gemäß Figur 2 bei einer in der Betriebsposition befindlichen Konditioniereinrichtung.

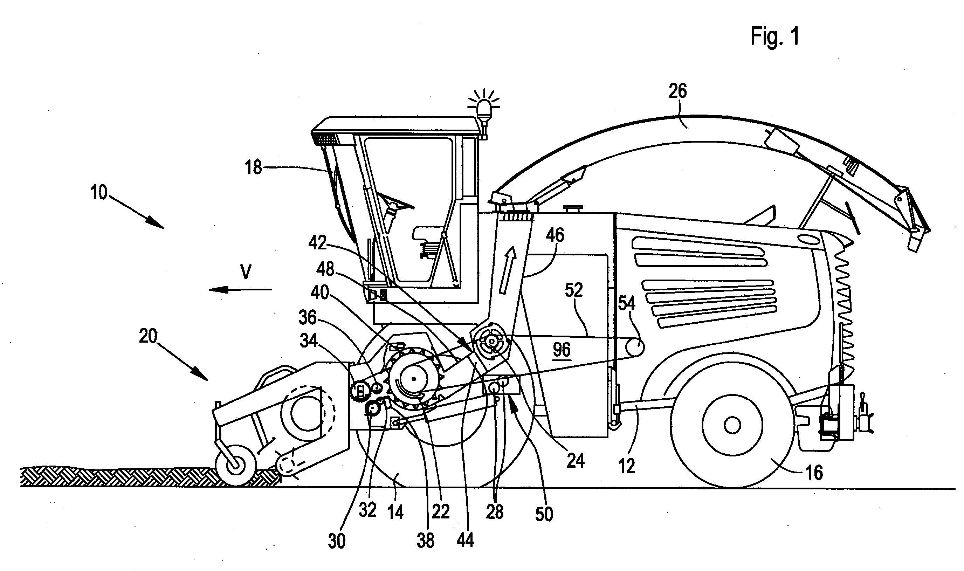

Ein in der Figur 1 gezeigter, selbstfahrender Feldhäcksler 10 baut sich auf einem Rahmen 12 auf, der von vorderen und rückwärtigen Rädern 14 und 16 getragen wird. Die Bedienung des Feldhäckslers 10 erfolgt von einer Fahrerkabine 18 aus, von der aus eine Erntegutaufnahmevorrichtung 20 in Form einer Pickup einsehbar ist. Mittels der Erntegutaufnahmevorrichtung 20 vom Boden aufgenommenes Gut, z. B. Gras oder dergleichen, wird im Emtebetrieb einer mit Häckselmessern 40 besetzten Häckseltrommel 22 zugeführt, die es im Zusammenwirken mit einer Gegenschneide 38 in kleine Stücke häckselt und es einem Nachbeschleuniger 24 aufgibt. Zwischen der Erntegutaufnahmevorrichtung 20 und der Häckseltrommel 22 wird das Gut durch untere Vorpresswalzen 30, 32 und obere Vorpresswalzen 34, 36 transportiert. Das Gut verlässt die Erntemaschine 10 stromab des Nachbeschleunigers 24 zu einem nebenher fahrenden Anhänger über einen Austragsschacht 46 und einen um die Hochachse drehbaren und abwurfendeseitig höhenverstellbaren Auswurfkrümmer 26. Im Folgenden beziehen sich Richtungsangaben, wie vom und hinten auf die Vorwärtsrichtung des Feldhäckslers 10, die in der Figur 1 nach links verläuft.

In einem nach hinten und oben ansteigenden, vom Häckselgut durchströmten Kanal 48 zwischen der Häckseltrommel 22 und der Fördervorrichtung 24 befindet sich ein Abschnitt 42, in den anstelle eines bei der Grasemte verwendeten hohlen Gehäuses 44 wahlweise eine Konditioniereinrichtung 50 mit zwei Walzen 28 eingefügt werden kann. Der Abschnitt 42 stellt somit eine Unterbrechung im Kanal 48 dar, in welche alternativ die Konditioniereinrichtung 50 oder das Gehäuse 44 eingefügt werden kann. Die Konditioniereinrichtung 50 wird insbesondere bei der Maisernte benötigt, um im Häckselgut enthaltene Körner zwecks besserer Verdaulichkeit anzuschlagen. Bei der Maisernte wird die in der Figur 1 gezeigte Erntegutaufnahmevorrichtung 20 durch einen Maisemtevorsatz ersetzt. Bei der Grasernte ist, wie in der Figur 1 dargestellt, jedoch das Gehäuse 44 in den Abschnitt 42 eingefügt, da keine Nachbearbeitung vorgesehen ist.

Der Antrieb der Häckseltrommel 22 und des Nachbeschleunigers 24 erfolgt über einen Riemen 52, der durch eine Riemenscheibe 54 angetrieben wird, die über ein geeignetes Getriebe (nicht gezeigt) von einem rückwärtig eines Freiraums 96 angeordneten Verbrennungsmotor (nicht gezeigt) angetrieben wird.

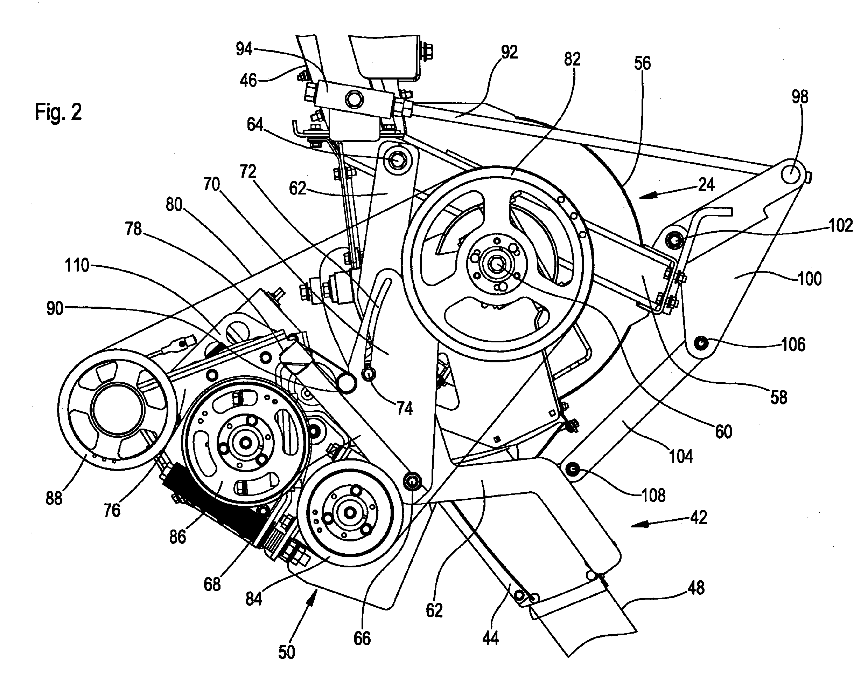

Die Figur 2 zeigt den Kanal 48 und den Nachbeschleuniger 24 (gegenüber der Figur 1, die die linke Seite des Feldhäckslers 10 darstellt) von der anderen, rechten Seite her betrachtet in einer vergrößerten Darstellung. Wie in der Figur 1 befindet sich das hohle Gehäuse 44, das keine Fördereinrichtungen enthält, im Abschnitt 42. Die Konditioniereinrichtung 50 befindet sich rückwärtig des Abschnitts 42 in ihrer Außerbetriebsposition.

Am Gehäuse 56 des Nachbeschleunigers 24 und am Austragsschacht 46 ist ein sich vom rückwärtigen, oberen Ende des Gehäuses 56 schräg nach vom und unten erstreckender Tragarm 58 befestigt. Am Tragarm 58 ist oberhalb und rückwärtig der Drehachse 60 des Nachbeschleunigers 24 ein Schwenkarm 62 um eine sich horizontal und quer zur Vorwärtsrichtung erstreckende Schwenkachse 64 drehbar abgestützt. Der Schwenkarm 62 erstreckt sich näherungsweise C-förmig nach unten und an seinem unteren Bereich ist das hohle Gehäuse 44 starr befestigt.

Am Schwenkarm 62 ist eine Halterung 68 um eine Achse 66 drehbar gelagert, die sich parallel zur Schwenkachse 64 erstreckt. Die Halterung 68 ist weiterhin mit einer sich vertikal und in Vorwärtsrichtung erstreckenden Platte 70 verbunden, in die ein bogenförmig gekrümmter Schlitz 72 eingebracht ist. In den Schlitz 72 greift wiederum ein starr am Gehäuse 56 des Nachbeschleunigers 24 angebrachter Mitnehmer 74 ein. Die Halterung 68 umfasst untere, horizontal nach innen zur Längsmittelebene des Feldhäckslers 10 gerichtete Winkel oder dgl., die einen Kanal bilden, in den Rollen oder andere, ebenfalls nach außen ragende Elemente ragen, die an einem Stützzusammenbau 76 der Konditioniereinrichtung 50 angebracht sind. Der Stützzusammenbau 76 mit der eigentlichen Konditioniereinrichtung 50 kann somit aus dem Kanal schräg nach hinten und oben herausgezogen werden, nachdem Arretierungsschrauben 78 abgenommen wurden. Die Konditioniereinrichtung 50 entspricht in ihrem Aufbau der Ausführungsform nach DE 10 2008 012 487 A1. Zum Antrieb der Walzen der Konditioniereinrichtung dient ein Riemen 80, der durch eine von der Welle des Nachbeschleunigers 24 angetriebene Riemenscheibe 82 angetrieben wird und die Walzen über Riemenscheiben 84, 86 antreibt. Eine frei mitlaufende Riemenscheibe 88 dient zum Herstellen eines hinreichenden Umschlingungswinkels des Riemens 82 um die mittlere Riemenscheibe 86. Eine weitere Riemenscheibe (nicht gezeigt) kann zum Spannen des Riemens 80 dienen.

Auf der linken Seite des Feldhäckslers 10 befinden sich ebenfalls ein Schwenkarm 62 und eine Halterung 68, die zu den in Figur 2 gezeigten Elementen spiegelsymmetrisch sind. Beide Halterungen sind durch ein Stabilisierungsrohr 90 untereinander verbunden.

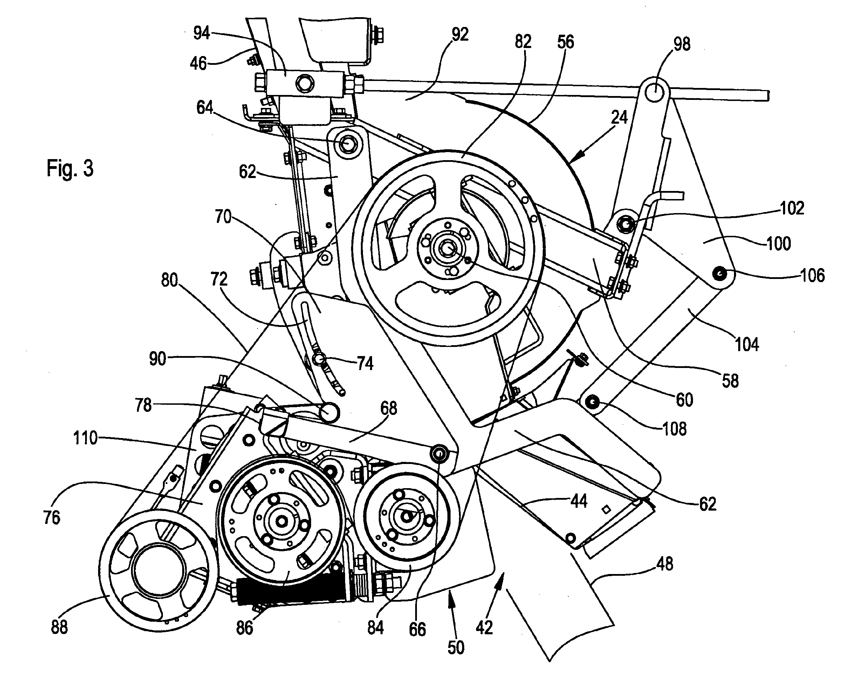

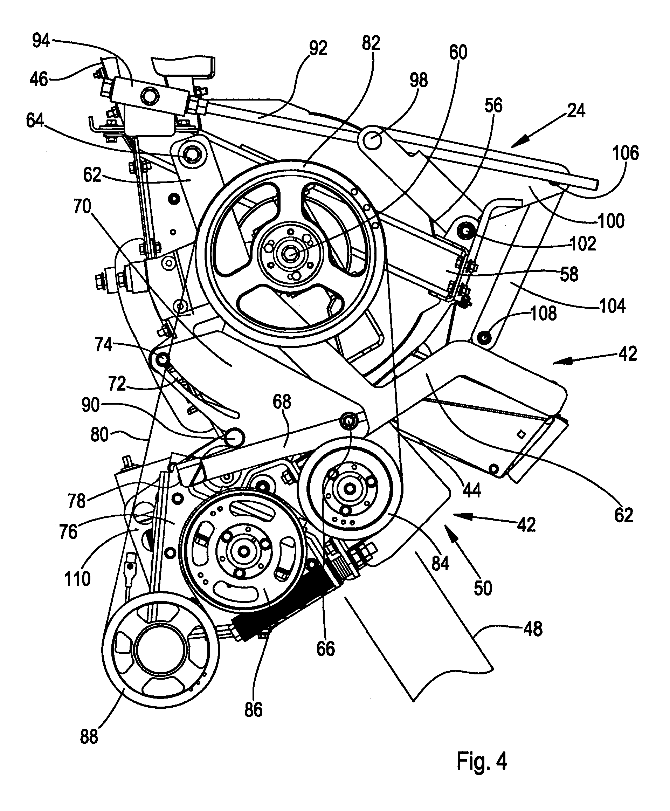

Ein Verstelltrieb dient zum Bewegen der Konditioniereinrichtung 50 zwischen der in der Figur 2 gezeigten Außerbetriebsposition über eine Zwischenposition (Figur 3) in die Betriebsposition (Figur 4). Der Verstellantrieb umfasst eine drehbare Spindel 92, die an ihrem links eingezeichneten Ende in einer Lagerung 94 abgestützt ist. An der linken Seite der Lagerung 94 kann eine Kurbel angesetzt werden, um die Spindel 92 von Hand zu drehen. Dazu kann sich der Bediener in einen Freiraum 96 (vgl. Figur 1) begeben, der von der rechten Seite des Feldhäckslers 10 her zugänglich ist. Es wäre auch denkbar, die Spindel mit einem abnehmbaren Motor (beispielsweise einer Bohrmaschine) oder einem fest installierten Motor zu drehen. Die Spindel 92 wirkt mit dem Innengewinde einer Stange 98 zusammen, die um eine sich horizontal und quer zur Vorwärtsrichtung erstreckende Achse drehbar an einer Schwenkplatte 100 gelagert ist. Die Schwenkplatte 100 ist um eine sich horizontal und quer zur Vorwärtsrichtung erstreckende Achse 102 schwenkbar am vorderen Ende des Trägers 58 angelenkt. Außerdem ist sie um eine sich horizontal und quer zur Vorwärtsrichtung erstreckende Achse 106 schwenkbar mit einer Stange 104 verbunden. Die Stange 104 ist an ihrem anderen Ende um eine sich horizontal und quer zur Vorwärtsrichtung erstreckende Achse 108 schwenkbar am Schwenkarm 62 angelenkt.

Nach alledem erhält man die anhand der Figuren 2 bis 4 erkennbare Bewegungskinematik des Gehäuses 44 und der Konditioniereinrichtung 50. Wenn der Verstellantrieb bewegt wird und sich die Spindel 92 ausgehend von der Außerbetriebsposition der Konditioniereinrichtung 50 gemäß Figur 2 im Uhrzeigersinn dreht, bewegt sich der Schwenkarm 62 im Gegenuhrzeigersinn, und damit auch das Gehäuse 44. Die aus der Platte 70 mit dem Schlitz 72 sowie dem Mitnehmer 74 aufgebaute Zwangsführung bewirkt, dass sich die Halterung 68 mit der Konditioniereinrichtung 50 gegenüber dem Schwenkarm 62 um die Achse 66 dreht, und zwar im Gegenuhrzeigersinn, wie der Schwenkarm 62. In der Betriebsposition befindet sich die Konditioniereinrichtung 50 im Abschnitt 42. Analog erfolgt die Rückbewegung durch Drehen der Spindel 92 im Gegenuhrzeigersinn. Dabei bewegt sich der Schwenkarm 62 im Uhrzeigersinn und die Halterung 68 mit der Konditioniereinrichtung 50 gegenüber dem Schwenkarm 62 um die Achse 66 ebenfalls im Uhrzeigersinn, d. h. nach oben. Dadurch erhält man eine relativ vertikale, kompakte Position der Konditioniereinrichtung 50 in ihrer Außerbetriebsstellung. Am Stützzusammenbau 76 der Konditioniereinrichtung 50 ist obenseitig eine Platte 110 mit Öffnungen mittig angebracht, an der ein Haken oder eine Öse einer Hubeinrichtung angebracht werden kann, die (nach Abnehmen des in der Position nach Figur 2 leicht entspannten Riemens 80) zum Herausziehen der Konditioniereinrichtung 50 aus der Halterung und zu ihrer Entnahme aus dem Freiraum 96 dienen kann. Die Schwenkachse 64 und die Zwangsführung sind derart positioniert, dass der Riemen 80 in der Betriebsposition nach Figur 4 gespannt und in der Außerbetriebsposition nach Figur 2 leicht entspannt ist und somit dort leicht abgenommen und angebracht werden kann.

## Patentansprüche

1. Selbstfahrender Feldhäcksler (10) mit einem Rahmen (12), einer Häckseltrommel (22), einem stromab der Häckseltrommel (22) angeordneten Nachbeschleuniger (24) und einem Kanal (48) zwischen der Häckseltrommel (22) und dem Nachbeschleuniger (24), der einen Abschnitt (42) umfasst, in den wahlweise eine Konditioniereinrichtung (50) oder ein hohles Gehäuse (44) einfügbar ist, wobei die Konditioniereinrichtung (50) und das hohle Gehäuse (44) gemeinsam an einem mittels eines Verstellantriebs um eine horizontale und sich quer zur Vorwärtsrichtung erstreckende Schwenkachse (64) verschwenkbaren Schwenkarm (62) abgestützt sind, der zwischen einer Betriebsposition der Konditioniereinrichtung (50), in welcher sich die Konditioniereinrichtung (50) im Abschnitt (42) befindet und einer Außerbetriebsposition der Konditioniereinrichtung (50) beweglich ist, in welcher sich das Gehäuse (44) im Abschnitt (42) befindet, **dadurch gekennzeichnet, dass** die Konditioniereinrichtung (50) um eine zur Schwenkachse (64) parallel verlaufende Achse (66) drehbar am Schwenkarm (62) angebracht ist und dass die Konditioniereinrichtung (50) durch eine Zwangsführung mit dem Rahmen (12) zusammenwirkt, welche bewirkt, dass die Konditioniereinrichtung (50) gleichsinnig mit dem Schwenkarm (62) um die Achse (66) dreht.

2. Feldhäcksler (10) nach Anspruch 1, **dadurch gekennzeichnet, dass** die Zwangsführung eine Platte (70) mit einem Schlitz (72) umfasst, in den ein Mitnehmer (74) eingreift.

3. Feldhäcksler (10) nach Anspruch 1 oder 2, **dadurch gekennzeichnet, dass** die Platte (70) starr mit der Konditioniereinrichtung (50) verbunden ist, und dass der Mitnehmer (74) mit dem Gehäuse (56) des Nachbeschleunigers (24) verbunden ist.

4. Feldhäcksler (10) nach einem der Ansprüche 1 bis 3, **dadurch gekennzeichnet, dass** die Konditioniereinrichtung (50) lösbar in einer Halterung (68) montiert ist, die drehbar an der Achse (66) gelagert und mit der Platte (70) gekoppelt ist.

5. Feldhäcksler (10) nach Anspruch 4, **dadurch gekennzeichnet, dass** die Konditioniereinrichtung (50) verschiebbar an der Halterung (68) gelagert ist.

6. Feldhäcksler (10) nach Anspruch 4 oder 5, **dadurch gekennzeichnet, dass** sich die Konditioniereinrichtung (50) in ihrer Außerbetriebsposition rückwärtig des Abschnitts (42) befindet und mit einem oder mehreren Kopplungspunkten für eine Hubvorrichtung ausgestattet ist, mit der sie herausgehoben werden kann.

7. Feldhäcksler (10) nach einem der Ansprüche 1 bis 6, **dadurch gekennzeichnet, dass** die Schwenkachse (64) hinter und/oder oberhalb der Drehachse (60) des Nachbeschleunigers (24) angeordnet ist.

8. Feldhäcksler (10) nach Anspruch 7, **dadurch gekennzeichnet, dass** die Konditioniereinrichtung (50) über einen Riemen (80) antreibbar ist, der mit einer Antriebswelle des Nachbeschleunigers (24) in Antriebsverbindung steht, und dass der Riemen (80) bei in die Außerbetriebsposition verbrachter Konditioniereinrichtung (50) entspannt und bei in die Betriebsposition verbrachter Konditioniereinrichtung (50) gespannt ist.

9. Feldhäcksler (10) nach einem der Ansprüche 1 bis 8, **dadurch gekennzeichnet, dass** der Verstellantrieb manuell und/oder fremdkraftbetätigt antreibbar ist.

10. Feldhäcksler (10) nach Anspruch 9, **dadurch gekennzeichnet, dass** der Verstellantrieb eine Spindel (92) umfasst, die über einen Hebelmechanismus mit dem Schwenkarm (62) zusammenwirkt.

## Claims

1. Self-propelled forage harvester (10) with a frame (12), a cutting cylinder (22), a post-accelerator (24) arranged downstream of the cutting cylinder (22) and a channel (48) between the cutting cylinder (22) and the post-accelerator (24), said channel comprising a section (42) into which a conditioning device (50) or a hollow housing (44) can optionally be fitted, wherein the conditioning device (50) and the hollow housing (44) are jointly supported on a pivoting arm (62) which is pivotable by means of an adjustment drive about a horizontal pivot axis (64) extending transversely with respect to the forwards direction and is movable between an operating position of the conditioning device (50), in which the conditioning device (50) is located in the section (42), and a non-operational position of the conditioning device (50), in which the housing (44) is located in the section (42), **characterized in that** the conditioning device (50) is mounted on the pivoting arm (62) so as to be rotatable about an axis (66) running parallel to the pivot axis (64), and **in that** the conditioning device (50) interacts with the frame (12) by means of a restraining guide which causes the conditioning device (50) to rotate about the axis (66) in the same direction as the pivoting arm (62).

2. Forage harvester (10) according to Claim 1, **characterized in that** the restraining guide comprises a plate (70) with a slot (72) in which a driver (74) engages.

3. Forage harvester (10) according to Claim 1 or 2, **characterized in that** the plate (70) is rigidly connected to the conditioning device (50), and **in that** the driver (74) is connected to the housing (56) of the post-accelerator (24).

4. Forage harvester (10) according to one of Claims 1 to 3, **characterized in that** the conditioning device (50) is fitted releasably in a holder (68) which is mounted rotatably at the axis (66) and is coupled to the plate (70).

5. Forage harvester (10) according to Claim 4, **characterized in that** the conditioning device (50) is mounted displaceably on the holder (68).

6. Forage harvester (10) according to Claim 4 or 5, **characterized in that** the conditioning device (50), in its non-operational position, is located to the rear of the section (42) and is equipped with one or more coupling points for a lifting device with which said conditioning device can be lifted out.

7. Forage harvester (10) according to one of Claims 1 to 6, **characterized in that** the pivot axis (64) is arranged behind and/or above the axis of rotation (60) of the post-accelerator (24).

8. Forage harvester (10) according to Claim 7, **characterized in that** the conditioning device (50) is drivable via a belt (80) which is connected in terms of drive to a drive shaft of the post-accelerator (24), and **in that** the belt (80) is relaxed when the conditioning device (50) is brought into the non-operational position and is tensioned when the conditioning device (50) is brought into the operating position.

9. Forage harvester (10) according to one of Claims 1 to 8, **characterized in that** the adjustment drive is drivable manually and/or in a manner actuated by external force.

10. Forage harvester (10) according to Claim 9, **characterized in that** the adjustment drive comprises a spindle (92) which interacts with the pivoting arm (62) via a lever mechanism.

## Revendications

1. Ramasseuse-hacheuse automotrice (10) comprenant un châssis (12), un rotor hacheur (22), un post-accélérateur (24) disposé en aval du rotor hacheur (22) et un canal (48) entre le rotor hacheur (22) et le post-accélérateur (24), lequel canal comporte une section (42) dans laquelle peut être inséré de manière sélective un dispositif de conditionnement (50) ou un boîtier creux (44), le dispositif de conditionnement (50) et le boîtier creux (44) étant supportés conjointement sur un bras pivotant (62) pouvant être pivoté au moyen d'un entraînement de réglage autour d'un axe de pivotement (64) horizontal et s'étendant transversalement par rapport à la direction d'avance, lequel bras pivotant est mobile entre une position de fonctionnement du dispositif de conditionnement (50), dans laquelle le dispositif de conditionnement (50) se trouve dans la section (42), et une position de non fonctionnement du dispositif de conditionnement (50), dans laquelle le boîtier (44) se trouve dans la section (42), **caractérisée en ce que** le dispositif de conditionnement (50) est fixé sur le bras pivotant (62) de manière à pouvoir tourner autour d'un axe (66) s'étendant parallèlement à l'axe de pivotement (64), et **en ce que** le dispositif de conditionnement (50) coopère avec le châssis (12) au moyen d'un guidage forcé qui provoque une rotation du dispositif de conditionnement (50) autour de l'axe (66) dans le même sens que le bras pivotant (62).

2. Ramasseuse-hacheuse (10) selon la revendication 1, **caractérisée en ce que** le guidage forcé comporte une plaque (70) pourvue d'une fente (72) dans laquelle vient en prise un élément d'entraînement (74).

3. Ramasseuse-hacheuse (10) selon la revendication 1 ou 2, **caractérisée en ce que** la plaque (70) est reliée rigidement au dispositif de conditionnement (50), et **en ce que** l'élément d'entraînement (74) est relié au boîtier (56) du post-accélérateur (24).

4. Ramasseuse-hacheuse (10) selon l'une quelconque des revendications 1 à 3, **caractérisée en ce que** le dispositif de conditionnement (50) est monté de manière amovible dans un support (68) qui est monté à rotation sur l'axe (66) et accouplé à la plaque (70).

5. Ramasseuse-hacheuse (10) selon la revendication 4, **caractérisée en ce que** le dispositif de conditionnement (50) est monté de manière mobile sur le support (68).

6. Ramasseuse-hacheuse (10) selon la revendication 4 ou 5, **caractérisée en ce que** le dispositif de conditionnement (50) se trouve, dans sa position de non fonctionnement, à l'arrière de la section (42) et est équipé d'un ou de plusieurs points d'accouplement pour un dispositif de levage à l'aide duquel il peut être sorti.

7. Ramasseuse-hacheuse (10) selon l'une quelconque des revendications 1 à 6, **caractérisée en ce que** l'axe de pivotement (64) est disposé derrière et/ou au-dessus de l'axe de rotation (60) du post-accélérateur (24).

8. Ramasseuse-hacheuse (10) selon la revendication 7, **caractérisée en ce que** le dispositif de conditionnement (50) peut être entraîné par le biais d'une courroie (80) qui est en liaison d'entraînement avec un arbre d'entraînement du post-accélérateur (24), et **en ce que** la courroie (80) est détendue lorsque le dispositif de conditionnement (50) a été amené à la position de non fonctionnement et tendue lorsque le dispositif de conditionnement (50) a été amené à la position de fonctionnement.

9. Ramasseuse-hacheuse (10) selon l'une quelconque des revendications 1 à 8, **caractérisée en ce que** l'entraînement de réglage peut être entraîné manuellement et/ou de manière actionnée par une force extérieure.

10. Ramasseuse-hacheuse (10) selon la revendication 9, **caractérisée en ce que** l'entraînement de réglage comporte une broche (92) qui coopère avec le bras pivotant (62) par le biais d'un mécanisme à levier.
